# EUROPÄISCHE PATENTSCHRIFT

(11) **EP 1 404 506 B1**
(45) Veröffentlichungstag und Bekanntmachung des Hinweises auf die Patenterteilung: **17.08.2005**
(21) Anmeldenummer: 02753059.1
(22) Anmeldetag: 07.06.2002
(51) Int. Cl.: B29C 49/66, B29C 49/42

(54) **VERFAHREN UND VORRICHTUNG ZUR HERSTELLUNG VON BLASGEFORMTEN HOHLKÖRPERN**
METHOD AND DEVICE FOR THE PRODUCTION OF BLOWN HOLLOW BODIES
PROCEDE ET DISPOSITIF DE PRODUCTION DE CORPS CREUX PAR SOUFFLAGE

(30) Priorität: 10.07.2001 DE 20111443 U
(43) Veröffentlichungstag der Anmeldung: 07.04.2004
(73) Patentinhaber: MAUSER-WERKE GmbH & Co. KG, 50321 Brühl 7 (DE)
(72) Erfinder: SCHULZE UPHOFF, Heinrich, Josef, 53115 Bonn (DE); JACOBS, Jan, Peter, 53797 Lohmar (DE)
(86) Internationale Anmeldenummer: PCT/EP2002/005678
(87) Internationale Veröffentlichungsnummer: WO 2003/008177

(56) Entgegenhaltungen:
- EP-A- 0 560 522
- EP-A- 0 754 537
- WO-A-96/25285
- US-A- 3 505 442
- US-A- 4 394 333

## Beschreibung

Die vorliegende Erfindung betrifft ein Verfahren und eine Vorrichtung zur Herstellung von blasgeformten Hohlkörpern aus Kunststoff, mit einer Blasformmaschine, bei welcher ein schlauchförmiger Vorformling aus verformbarem Kunststoff zwischen die geöffneten Hälften einer Blasform extrudiert und nachfolgend zum Ausformen des blasgeformten Hohlkörpers ein vorzugsweise gasförmiges Kühlmedium über eine Rohrleitung in die Blasform bzw. in den Hohlkörper einblasbar ist. Nach dem Ausformen des schlauchförmigen Vorformlings zu dem eigentlichen Hohlkörper muß anschließend der fertig geblasene Hohlkörper bzw. das Kunststoff-Produkt solange gekühlt werden und in der Form verbleiben, bis es eine ausreichende Formsteifigkeit erhält und aus der Blasform entnommen werden kann. Die Zeit, in welcher der Hohlkörper gekühlt wird, wird als Kühlzeit bezeichnet.

Der Kühlvorgang des Kunststoff-Hohlkörpers in der Blasform ist in der Regel der langsamste und damit geschwindigkeitsbestimmende Schritt für die Produktivität einer Blasformmaschine. Mit Verkürzung der Kühlzeit kann die Leistungsfähigkeit bzw. die ausgebrachte Stückzahl der pro Zeiteinheit produzierten Artikel ganz erheblich gesteigert werden. Die Kühlung des Hohlkörpers innerhalb der Blasform erfolgt zum einen von außen durch den direkten Kontakt des Kunststoffmateriales mit der Innenwandung der gekühlten Blasform und zum anderen nach innen über das eingeblasene Kühlmedium. Unter Innenkühlung nach dem Stand der Technik werden hierbei alle Verfahren verstanden, die dem Blasteil an seiner Innenseite Wärme entziehen. Hierbei findet ein Wärmeübergang von der Innenseite der Hohlkörperoberfläche auf die im Hohlkörper befindlichen Kühlmedien und danach ein Wärmeabtransport statt. Die durch die Medien aufgenommene Energie wird dem Hohlkörper entzogen und zusammen mit den Medien der äußeren Umgebung zugeführt.

### Stand der Technik:

Die bislang eingesetzten Verfahren der Innenkühlung von blasgeformten Kunststoff-Hohlkörpern unterscheiden sich durch die Art und den Zustand des bzw. der eingesetzten Medien, einen eventuell stattfindenden Phasenübergang und die Art des Austausches zwischen dem Inneren des Hohlkörpers und der Umgebung. In der Regel wird komprimierte Luft (Druckluft) als Medium eingesetzt. Beim sogenannten Stauluftverfahren wird der Hohlkörper mittels eingeblasener Druckluft aus dem Vorformling aufgeblasen. Der Blasdruck beträgt dabei üblicherweise 5 bis 8 bar. Die dabei im Hohlkörper eingeschlossene Druckluft verbleibt zunächst dort, nimmt Wärme von der Hohlkörper-Innenseite auf und wird beim Entlüften an die Umgebung abgegeben.
Hierbei wird dem Hohlkörper eine gewisse Wärmemenge entzogen. Das sogenannte Intervallblasverfahren arbeitet in ähnlicher Weise. Bei diesem Verfahren läßt man die im Hohlkörper eingeschlossene und erwärmte Luft in Intervallen entweichen. Diese wird dann durch Druckluft geringerer Temperatur ersetzt. Beim Spül- oder Blasluftverfahren geschieht der Austausch von warmer durch kalte Druckluft kontinuierlich in Form eines Spülvorganges. Eine Möglichkeit diese bekannten Verfahren zu intensivieren besteht darin, die eingesetzte Blasluft vorher abzukühlen, beispielsweise von normaler Presslufttemperatur von 25° C auf 0° C, oder nach vorhergehender Trocknung der Blasluft (beispielsweise durch einen Adsorptionstrockner) auf unter 0° C, z. B. - 30° C, weiter herunter zu kühlen. Dadurch wird eine Vergrößerung der Temperaturdifferenz zwischen der Druckluft und der inneren Oberfläche des Hohlkörpers erreicht. Auch die Erhöhung des Blasdruckes auf ein deutlich über dem Normalen liegendes Niveau, kann als eine eigenständige Variante der Innenkühlung angesehen werden. Weitere nach dem Stand der Technik übliche Innenkühlverfahren sind die Innenkühlung mit tiefkalten, verflüssigten Gasen. Hierbei wird z. B. nach dem Aufblasen des Vorformlings mit der komprimierten Luft tiefkaltes verflüssigtes Kohlendioxid oder Stickstoff als ein zusätzliches Medium in den Hohlkörper eingespritzt. Diese flüssigen Komponenten verdampfen und erwärmen sich unter Aufnahme von erheblichen Wärmemengen. Eine weitere Möglichkeit ist die Innenkühlung durch Einspritzen von Wasser oder anderen Medien nach dem Aufblasen des Vorformlings. Dabei kann die Zugabe dieser Kühlmedien sowohl kontinuierlich als auch intermittierend erfolgen. Einige der zuvor erwähnten Verfahren werden auch in Kombination eingesetzt.

Das Dokument WO 96 252 85 A (=D1) offenbart alle Merkmale der Oberbegriffe der Ansprüche 1 und 14.

Aus dieser Vorveröffentlichung ist ein zweistufiges Verfahren zum Streckblasen von extrem dünnwandigen Flaschenkörpern bekannt. Dabei wird ein Vorformling, vorzugsweise aus PET, aufgeheizt und in die Blasform eingeführt. Die Druckluft wird zuerst mit niedrigem Druck von etwa 10 bar und dann in der zweiten Stufe mit etwa 40 bar in die fertige Form geblasen. Nach einer kurzen Verfestigungs-phase wird die Druckluft aus der Flasche abgelassen, die Form geöffnet und die fertige Flasche entnommen. Ein ganzer Herstellzyklus dauert zwei bis drei Sekunden. Bei diesem Verfahren soll der Energiehaushalt durch Wärmerückgewinnung optimiert werden. Dabei wird mittels eines Kolben-Gasdruckmotors für die Hochdruckphase ein eingeschlossenes Luftpolster hin- und herbewegt und dabei komprimiert und expandiert. Bei der Verdichtung erhöht sich die Temperatur der Druckluft um etwa 80° bis 140° und nimmt damit annähernd die Temperatur des vorerwärmten Formlings an. Bei der Rückwärtsbewegung des Druckkolbens wird die Druckluft wieder expandiert und dabei die Kompressionswärme zurückgewonnen, weil die Temperaturerhöhung beider adiabatischen Verdichtung und Expansion wiederum auf die Ausgangstemperatur zurückgebracht wird, so daß nur geringe Wärmeverluste entstehen. In der ersten isotherm arbeitenden Druckstufe wird der Vorformling bereits zur fertigen Flasche aufgeblasen und eine Abkühlung der dünnen Flaschenwandung erfolgt durch Anlage an der gekühlten Blasforminnenwandung; eine Innenkühlung der aufgeblasenen Flasche durch kontinuierliche Spülluft findet nicht statt.

Ein weiteres mehrstufiges Verfahren zum Blasformen von thermoplastischen Hohlkörpern unter teilweiser Rückgewinnung des reaktiven Blasmediums ist aus dem Dokument US-A-4 394 333 (= D2) bekannt. Hierbei wird der schlauchförmige Vorformling in der ersten Stufe mit einem Reaktionsgas aus 0,1 % bis 10 % Fluorgas und 99,9 % bis 90 % Inertgas aufgeblasen, um durch eine Fluorgasbehandlung die Permeabilität des fertig geblasenen Kunststoff-Behälters gegen bestimmte Bestandteile des Füllgutes zu verringern. Nach dem Aufblasen des Behälters wird die Zufuhrleitung mit dem reakativen Blasmedium abgesperrt und in der zweiten Stufe wird ein Spülgas mit ca. 0.5 bis 3 bar höherem Druck als der Blasdruck von ca. 5 bar solange durch den Behälter in den Vorratstank des Reaktionsgases geleitet, bis der größte Teil des Reaktionsgases rückgeleitet und der Druck im Vorratstank des Reaktionsgases wieder auf den ursprünglichen Wert angestiegen ist. Danach wird die Zuführleitung des Spülgases mit rückgespültem Reaktionsgas geschlossen bzw. umgestellt, so daß in einer dritten Stufe das weitere Spülgas mit nur noch restlichem verdünntem Reaktionsgas nach einer entsprechenden Waschstufe ins Freie abgelassen wird. Dieses Verfahren dient dem Zweck, das teure fluorhaltige Reaktionsgas größtenteils wieder rückzugewinnen und zu vermeiden, das größere Mengen dieses umweltschädlichen Reaktionsgases in die freie Atmosphäre gelangen.

Ein Verfahren zur Kühlung von blasgeformten Kunststoffartikeln ist weiterhin aus der Druckschrift US-A-3 505 442 (= D3) bekannt. Bei diesem dreistufigen Verfahren wird zunächst ein Druckmedium über eine Einlaßdüse in den schlauchförmigen Vorformling eingeblasen, bis dieser die endgültige Form des Hohlkörpers erreicht hat und an der Innenseite der Blasform anliegt. In der nachfolgenden Stufe wird das Druckmedium abgestellt und über eine zweite Einblasdüse ein Kühlmedium, z. B. kalte Luft oder Kohlendioxid, zur Innenkühlung in den Hohlkörper eingeblasen. Für eine bessere Verteilung des Kühlmediums und zur Erhöhung der Kühlwirkung weist die Einblasdüse mehrere unter einem Winkel angeordnete Einlaßöffnungen auf.
Kurz vor Ende des Kühlvorganges wird in einer dritten Stufe die Einlaßdüse des Druckmediums derart freigeschaltet, daß das Kühlmedium nun aus dieser Einlaßdüse in die Atmoshäre abströmen kann; sobald der Kühlvorgang beendet und die Blasform drucklos ist, wird der fertig gekühlte Artikel aus der Blasform entnommen.

Schließlich ist aus dem Dokument US4367187 A (= D4) noch ein anderes zweistufiges Verfahren zur Herstellung von blasgeformten Kunststoffartikeln bekannt, bei dem zur Verbesserung der Innenkühlung ein verflüssigtes Kühlmedium, hier flüssiger Stickstoff, in den aufgeblasenen Kunststoff-Hohlkörper eingedüst wird. Unter Wärmeentzug aus dem Hohlkörper expandiert der flüssige Stickstoff in die Gasphase, und strömt danach in einer kurzzeitigen Kreislaufschaltung in einen Vorratsbehälter, bevor das System drucklos geschaltet und der abgekühlte Hohlkörper aus der geöffneten Blasform entnommen wird. Im nächsten Zyklus wird in erster Stufe der verflüchtigte Stickstoff als Druckgas aus dem Vorratsbehälter zum Aufblasen des schlauchförmigen Vorformlings verwendet und in der zweiten Kühlstufe wird erneut flüssiger Stickstoff eingeblasen. Durch die Kreislaufführung des gasförmigen Stickstoffs soll zumindest ein Teil des kostenintensiven Kühlmediums zurückgewonnen werden.

### Aufgabe :

Es ist danach Aufgabe der vorliegenden Erfindung, die Innenkühlung von blasgeformten Kunststoff-Hohlkörpern weiter zu verbessern und dabei insgesamt betrachtet, die Herstellkosten für die erzeugten Kunststoffartikel weiter abzusenken.
Diese Aufgabe wird vorrichtungsmäßig mit den im Anspruch 1 enthaltenen Merkmalen gelöst. Die nachfolgenden Unteransprüche enthalten weitere vorteilhafte Ausgestaltungsmöglichkeiten der erfindungsgemäßen Blasformanlage. Die Aufgabe wird verfahrensmäßig mit den im Anspruch 14 enthaltenen Merkmalen gelöst. Die nachfolgenden Unteransprüche enthalten dazu weitere vorteilhafte Ausgestaltungsmöglichkeiten.
Die erfindungsgemäße Vorrichtung dient zur Realisierung einer Innenkühlung neuester Art. Die in der Blasform bzw. in dem darin aufgeblasenen Hohlkörper realisierte Kühlwirkung erfolgt etwa gemäß einer Kombination von drei bekannten Verfahren, nämlich des Blasluftverfahrens mit Einsatz von gekühlter oder noch weiter herunter gekühlter bzw. tiefgekühlter Druckluft unter Blasdruckerhöhung. Dabei kann die Blasluft bzw. das Blasmedium mit einem weiteren gasförmigen Medium (z. B. Stickstoff) angereichert werden.

Die verfahrensmäßige Funktion der erfindungsgemäßen Vorrichtung läßt sich in folgender Weise zusammenfassen:
**1.** Das Kühlmedium wird in einem geschlossenen Rohrleitungssystem im Kreislauf geführt, mittels eines oder mehrerer Filter gefiltert und mittels integrierter Wärmetauscher gekühlt oder mittels zusätzlichem Kühlaggregat noch weiter herunter gekühlt.
**2.** Der Kühlmittel-Kreislauf wird in dem geschlossenen Rohrleitungssystem je nach Hohlkörpergröße auf erhöhtem Druckniveau bis ca. 20 bar geführt.
**3.** Das Kühlmedium wird zur Erzielung einer verbesserten Kühlwirkung mittels eines Drallkörpers unter Rotationsströmung und Verwirbelung mit Verbesserung des Wärmeaustausches in den Hohlkörper eingeblasen.
**4.** Die Wärmekapazität des Kühlmediums wird durch Anreicherung der Blasluft bzw. teilweises oder ganzes Ersetzen durch andere gasförmige oder flüssige Medien (z. B. Kohlendioxid, Stickstoff, Propan, Wasser, Edelgase oder andere Gase, die eine höhere Wärmekapazität als Luft aufweisen) oder andere Kühlmittel erhöht.

### Beschreibung der Vorrichtung :

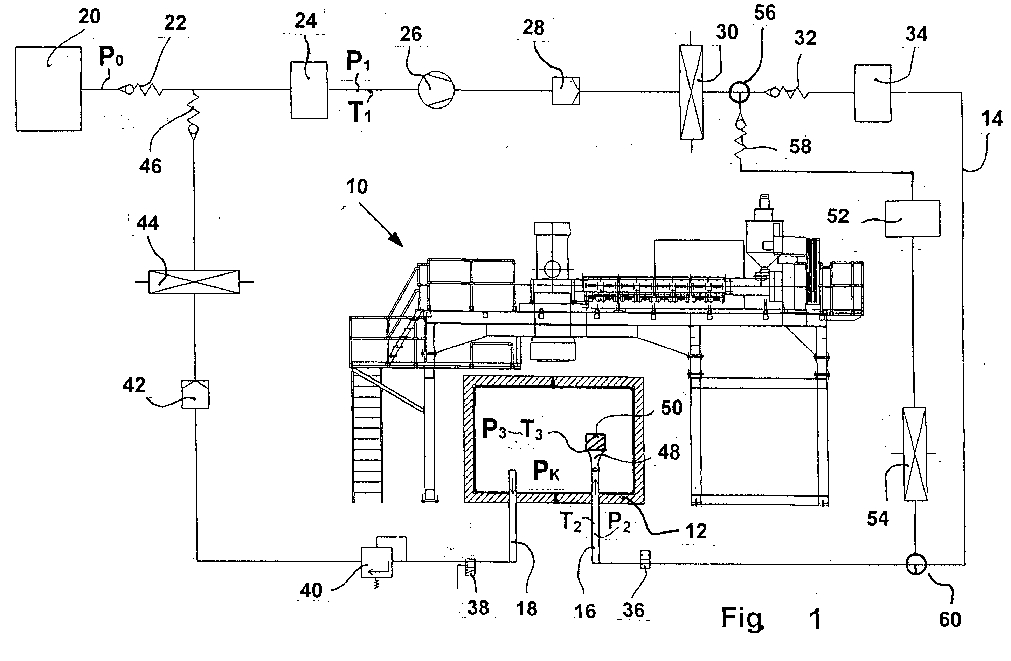

Die vorliegende Erfindung wird nachfolgend anhand eines in der Zeichnung **Figur 1** schematisch dargestellten Ausführungsbeispiels näher erläutert und beschrieben :
Die Vorrichtung umfaßt eine Blasformmaschine 10 mit Blasform 12, in welcher die Kunststoff-Hohlkörper aufgeblasen werden. Die Blasform 12 ist in ein geschlossenes Rohrleitungssystem 14 für das Blas- und Kühlmedium bzw. die Blasluft integriert.
In aller Regel ist das Blas- und Kühlmedium normale Luft, es wird daher nachfolgend der Einfachheit halber von Blas- bzw. Kühlluft gesprochen. Die Blasluft kann natürlich teilweise oder ganz durch andere gasförmige oder flüssige Medien (z. B. Kohlendioxid, Stickstoff, Propan, Edelgase oder andere Gase mit erhöhter Wärmekapazität) angereichert oder ersetzt werden. Es ist auch möglich, daß vergasende oder verdampfende flüssige (z. B. Wasser) oder/und feste Medienpartikel (z. B. Kohlendioxid-Eis) zusätzlich mit in den Hohlkörper eingedüst werden. Das Eindüsen der Blasluft in den Hohlkörper erfolgt eingangsseitig über einen Blasdorn 16 und ausgangsseitig ebenfalls über einen entsprechenden Blas- bzw. Spreizdorn 18. Bei bestimmten Hohlkörpern wie z. B. Kanistern, die nur eine einzige Einfüll- und Entleerungsöffnung aufweisen, ist der einzige Blasdorn üblicherweise mit einer Einströmleitung und einer entsprechenden Ausströmleitung für die Druckluft ausgestattet. Die Einströmleitung und die Ausströmleitung können nebeneinander oder konzentrisch in dem einen Blasdorn angeordnet sein.
Das Rohrleitungssystem 14 umfaßt auf der Eingangsseite als weitere Bauteile einen Anschluß 20 an ein Kühlmedium-Reservoir, ein Rückschlagventil 22, einen Speicherbehälter 24, einen Verdichter 26, einen Filter 28, einen Wärmetauscher 30 oder ein Kühlaggregat, ein weiteres Rückschlagventil 32, einen zweiten Speicherbehälter 34 und möglichst direkt vor dem Blasdorn 16 ein Absperrventil 36. Auf der Ausgangsseite befindet sich ebenfalls möglichst direkt hinter dem Blasdorn 18 ein weiteres Absperrventil 38 mit Entlüftungsauslaß. Dahinter schließen sich ein Druckregelventil 40, ein zweiter Filter 42, ein zweiter Kühler 44 (= Wärmetauscher) und ein weiteres Rückschlagventil 46 an. Das Rohrleitungssystem 14 schließt sich im Kreislauf hinter dem Rückschlagventil 46 und dem ersten Rückschlagventil 22. Bei Einsatz eines Kühlmediums, dessen Temperatur unterhalb des Gefrierpunktes für Wasser liegt, sind alle damit in Berührung kommenden Komponenten der Vorrichtung dahingehend in geeigneter Weise auszulegen, um ein Einfrieren von einzelnen Bauelementen auszuschließen.

### Beschreibung des Verfahrens :

Das Kühlmedium (z. B. Blasluft) wird mit einer Temperatur T₁ und einem Druck P₁ aus dem Speicherbehälter 24 entnommen. Dieser Speicherbehälter 24 wird über ein Rückschlagventil 22 auf dem Mindestdruck P₀ (z. B. 5 bar) eines vorhandenen Kühlmedium-Reservoirs gehalten. Das aus dem Speicherbehälter 24 entnommene Medium wird mittels eines Verdichters 26 auf einen höheren Druck (z. B. 20 bar) verdichtet und nach Filterung in der Filtereinheit 28 und Abkühlung auf eine niedrigere Temperatur im Kühler 30 in einen weiteren Speicherbehälter 34 geleitet. Aus diesem Speicherbehälter 34 wird der Vorformling, der sich innerhalb der Blasform 12 der Blasformmaschine 10 befindet, durch das Medium zum fertigen Hohlkörper aufgeblasen und ausgeformt. Im Anschluß daran wird der Hohlkörper nach einer eventuellen Haltephase kontinuierlich zu Kühlzwecken mit dem Kühlmedium aus dem Speicherbehälter 34 gespült. Das Aufblasen und Spülen bzw. Kühlen erfolgt über einen ersten Blasdorn 16, der in die Einlaßöffnung des Hohlkörpers eingebracht ist. Durch diesen Blasdorn 16 strömt das Kühlmedium über eine Düse 48 in den Hohlkörper ein. An der Düse 48 befindet sich ein strömungstechnisches Leitgitter bzw. Drall-Leitblech 50. Dieses Leitblech 50 gibt der Strömung des bis dahin axial strömenden Kühlmediums eine Geschwindigkeitskomponente in Umfangsrichtung (Rotationsströmung), wodurch das Kühlmedium stark verwirbelt. In dieser Weise strömt das Medium zur Kühlung in den Hohlkörper. Im Anschluß daran strömt das Kühlmedium durch eine Ausströmleitung bzw. den Auslaß-Blasdorn 18 und das Druckregelventil 40 aus dem Hohlkörper. Das Medium wird nun nach dem Austritt aus dem Hohlkörper jedoch nicht wie bislang üblich in die Umgebung abgegeben, sondern nach Filterung in der Filtereinheit 42 und Kühlung im Kühler 44 auf die Temperatur T₁ (z. B. 15 ° C) über ein weiteres Rückschlagventil 46 wieder dem Speicherbehälter 24 zugeführt und so im Kreislauf gefahren und immer wieder genutzt. Durch die Rückschlagventile 22, 32, 46 wird die vorgegebene Strömungsrichtung in jedem Prozeßzustand sichergestellt. Das Druckregelventil 40 stellt zusammen mit der Kompressorregelung sicher, daß der Druck innerhalb des Behälters nicht unter ein vorher festgelegtes Niveau abfällt.
Zur Entnahme des ausreichend abgekühlten Hohlkörpers aus der geöffneten Blasform werden kurzzeitig die dicht vor bzw. hinter den Blasdornen 16 und 18 befindlichen Absperrventile gesperrt und die Blasform entlüftet (druckentlastet). Die dabei auftreten Verluste an Kühlmedium werden über das Rückschlagventil 22 und den Anschluß 20 aus einem Kühlmedium-Reservoir ausgeglichen.

In einer weitergehenden Ausführungsform wird die im Kreislauf eingesetzte Blasluft zusätzlich in einem Trockner 52 getrocknet und in mindestens einem Kühlaggregat 54 auf eine Temperatur von 0° C bis - 50° C, vorzugsweise bis auf - 30° C, weiter herunter gekühlt.

Vorrichtungsmäßig ist dazu vor dem Rückschlagventil 32 mit einem Umschaltventil 56 ein parallele Abzweigleitung (Bypass) integriert. In dieser Abzweigleitung wird nach einem Rückschlagventil 58 das Blasmedium in dem Trockner 52 (z. B. ein Adsorptionstrockner) bis zu einem hinreichend tiefen Taupunkt getrocknet und in mindestens einem Kühlaggregat 54 weiter heruntergekühlt. Über ein weiteres Umschaltventil 60 wird diese so getrocknete und weiter heruntergekühlte Blasluft in den geschlossenen Kreislauf eingekoppelt.

Bei dieser Ausführungsform wird der zu produzierende Hohlkörper zunächst über den normalen Kreislauf mit nicht weiter heruntergekühltem Blasmedium vorgeblasen (z. B. Stützluft) und aufgeblasen; für die Kühlphase werden dann die Ventile 56 und 60 umgeschaltet und das tiefer heruntergekühlte Blasmedium wird über die parallele Kühlstrecke in den geschlossenen Kreislauf und in den aufgeblasenen Hohlkörper eingeleitet.

Die Besonderheit des erfindungsgemäßen Verfahrens zeichnet sich durch folgende neue Maßnahmen und Vorteile aus :
**I.)** Die zur Kühlung eingesetzten Medien werden mit nur geringen Verlusten auf entsprechendem Druckniveau ausschließlich im Kreislauf gefahren; das Druckniveau kann dabei je nach Hohlkörpergröße bis zu 20 bar betragen. Die Kühlmedien dienen so zum Wärmeaustausch und -transport zwischen der Innenseite der Hohlkörperoberfläche und einem Wärmetauscher (Wärmeabgabe aus dem System). Daher müssen vom Verdichter im Betrieb nur die vergleichsweise geringen Systemverluste beim Druckentlasten des Hohlkörpers für dessen Entnahme aus der geöffneten Blasform sowie die Strömungsverluste und Expansionsarbeit innerhalb des Medienkreislaufes aufgebracht werden. Dies hat zur Folge, daß ohne wesentlichen Betriebsmittelverbrauch an Kühl medium mit sehr großem Volumenstrom auf einem hohen Innendruckniveau gearbeitet werden kann.
   Allen bisher bekannten Verfahren haftet nach wie vor der gleiche Nachteil an, daß nach dem Übergang von Wärmeenergie aus dem Inneren des Behälters an das Blas- bzw. Kühl-Medium, das Medium selbst, insbesondere wenn es auf relativ hohem Druckniveau geführt wird, an die Umgebung abgegeben wird und so für eine Weiterführung und Weiternutzung im Kühlprozeß nicht mehr zur Verfügung steht.
**II.)** Durch den Einsatz eines Leitgitters bzw. Strömungsleitbleches an bzw. in der Düse wird ein Drall in die Strömung eingebracht. Dieser führt zu einer zusätzlichen Rotationsströmung und Medienverwirbelung im Hohlkörper. Auch hiermit ist eine weitere Verbesserung des Wärmeübergangs und -abtransportes von der Innenseite der Hohlkörperoberfläche auf die im Hohlkörper befindlichen Medien durch Verstärkung der Konvektion verbunden. Zusätzlich wird so der Entstehung von Zonen, in denen sich die Strömung des Kühlmediums von der Hohlkörperoberfläche ablöst ("Totwassergebiet"), sehr wirkungsvoll entgegengewirkt. Dies ist besonders wichtig, da in diesen Totwassergebieten kaum Wärmetransport zwischen der Hohlkörperoberfläche und dem Kühlmedium stattfindet.
   Die Kühlung des Hohlkörpers erfolgt aufgrund der sehr hohen Strömungsgeschwindigkeit, der niedrigen Temperatur und der zusätzlichen Rotationsströmung innerhalb des Hohlkörpers sehr intensiv. Daraus ergibt sich eine wesentliche Produktivitätssteigerung des Blasformprozesses durch Verkürzung der Kühl- bzw. Taktzeiten und Vergrößerung des Produktausbringens (Stück/Stunde).
**III)** Durch den Einsatz des Kühlmediums im Kreislauf wird insbesondere bei größeren Hohlkörpern ein erheblicher Kostenvorteil durch Energie- und Betriebsmitteleinsparungen erzielt. Dies gilt in verstärktem Maße beim Einsatz von weiter heruntergekühlter Blasluft von 0° C bis - 50° C (vorzugsweise ca. - 30° C). Diese weiter heruntergekühlte Blasluft muß vor ihrem Einsatz intensiv getrocknet werden um Kondensat und nachfolgende Eisbildung zu vermeiden. Dieses kann beispielsweise in einem Adsorptionstrockner erfolgen. Diese Trocknung ist vergleichsweise kostenintensiv von der Investition und vom Energieeinsatz her. Durch den Einsatz des Kühlmediums im geschlosse nen Kreislauf sinkt jedoch der Aufwand für die Trocknung in Abhängigkeit vom Verhältnis zwischen (verlorenem) Entlüftungsanteil und Spülanteil ganz erheblich je nach den vorgegebenen verfahrenstechnischen Parametern um bis zu 80%.
**IV.)** Die Wärmekapazität des Kühlmediums Luft wird durch Anreicherung bzw. teilweises oder ganzes Ersetzen durch andere gasförmige oder flüssige Medien (z. B. Kohlendioxid, Stickstoff, Propan, Edelgase oder andere Gase, die eine höhere Wärmekapazität als Luft aufweisen) oder andere Kühlmittel noch erhöht. Die gemäß der Erfindung geschlossene Kreislaufführung des Kühlmediums eignet sich in vorteilhafter und kostengünstiger Weise aufgrund der geringen Verluste insbesondere auch in diesem Fall.

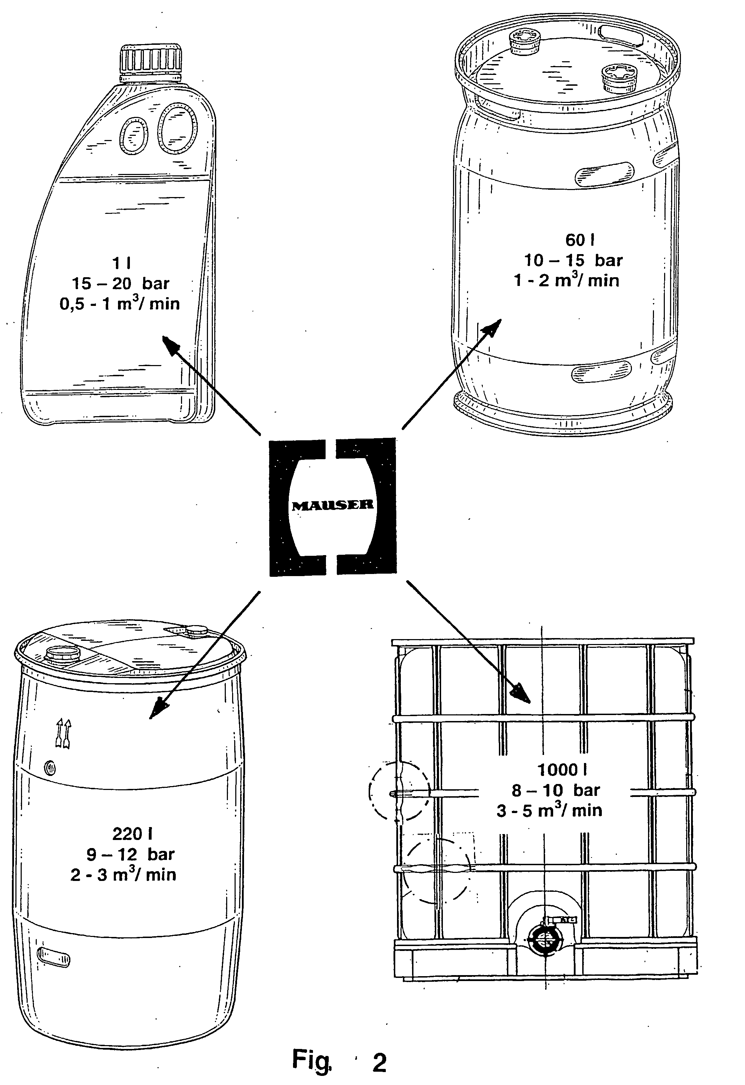

In der nachfolgenden Tabelle sowie in der zeichnerischen Darstellung Figur 2 ist für verschieden große Kunststoff-Behälter ein vorzugsweise anwendbarer Blasdruck und Volumenstrom an Blasluft/Kühlmedium angegeben :

| PRODUKT | VOLUMEN | DRUCK | VOL.-STROM |
|---|---|---|---|
| Dose Hurrican | 1 l | 15 - 20 bar | 0,5 - 1 m³/ min |
| Kanister | 30 l | 10 - 15 bar | 1 - 2 m³/ min |
| SVR-Fäßchen | 50 l | 10 -15 bar | 1 - 2 m³/ min |
| Vanguard Faß | 136 l | 9 - 12 bar | 2 - 3 m³/ min |
| L-Ring Faß | 220 l | 9 - 12 bar | 2 - 3 m³/ min |
| TC 1000 | 1000 l | 8 - 10 bar | 3 - 5 m³/ min |

Die Erfindung kann auf vorteilhafte Weise bei vorhandenen Blasformmaschinen vorrichtungs- und verfahrensmäßig einfach nachgerüstet werden. Damit wird dann ein erhöhtes Stückzahl-Ausbringen der Blasformmaschine bei niedrigeren Herstellkosten erzielt.
Der maschinentechnische Aufwand bzw. die Investitionen dafür sind vergleichsweise gering und eine Amortisation wird durch die entsprechende Leistungssteigerung der Anlage in der Regel in kurzer Zeit realisiert.

### Bezugsziffernliste

- **10**: Blasformmaschine
- **12**: Blasform
- **14**: geschlossenes Rohrleitungssystem
- **16**: Blasdorn Ein
- **18**: Blasdorn Aus
- **20**: Anschluß an Kühlmedium-Reservoir
- **22**: Rückschlagventil
- **24**: Speicherbehälter
- **26**: Verdichter
- **28**: Filtereinheit
- **30**: Kühler (= Wärmetauscher)
- **32**: Rückschlagventil
- **34**: Speicherbehälter
- **36**: Absperrventil Ein
- **38**: Absperrventil Aus
- **40**: Druckregelventil
- **42**: Filtereinheit
- **44**: Kühler (= Wärmetauscher)
- **46**: Rückschlagventil
- **48**: Düse
- **50**: Drall-Leitblech
- **52**: Trockner
- **54**: Kühlaggregat
- **56**: Umschaltventil
- **58**: Rückschlagventil
- **60**: Umschaltventil

## Patentansprüche

1. Blasformmaschine (10) zur Herstellung von blasgeformten Hohlkörpern aus Kunststoff, bei welcher ein schlauchförmiger Vorformling aus verformbarem Kunststoff zwischen die geöffneten Hälften einer Blasform (12) extrudiert und nachfolgend in der geschlossenen Blasform zum fertigen Hohlkörper aufgeblasen wird, wobei zum Aufblasen des Hohlkörpers Blasluft über eine Rohrleitung (14) bzw. einen Blasdorn (16) in den Hohlkörper einblasbar ist, und wobei die Blasform (12) in ein geschlossenes Rohrleitungssystem (14) integriert ist,
**dadurch gekennzeichnet, daß**
das Rohrleitungssystem (14) als Ringleitung ausgebildet ist und für eine kontinuierliche Kreislauf-Führung der Blasluft als Kühlmedium zur Innenkühlung des Hohlkörpers nach erfolgtem Ausformen auf erhöhtem Druckniveau ein Verdichter (26) vorgesehen ist, und das Rohrleitungssystem (14) zur Sicherstellung einer immer gleichen vorgegebenen Strömungsrichtung in jedem Prozeßzustand mit wenigstens einem Rückschlagventil (22, 32, 46) ausgestattet ist, wobei das geschlossene Ringleitungssystem (14) auf der Eingangsseite zum Einblasen der Blasluft in die Blasform (12) eine Einströmleitung und auf der Ausgangsseite zum Herauslassen der Blasluft aus der Blasform (12) eine Ausströmleitung aufweist.

2. Blasformmaschine nach Anspruch 1, wobei
die Einströmleitung zum Einblasen der Blasluft in die Blasform (12) bzw. in den Hohlkörper an einen als Einblasdüse wirkenden Blasdorn (16) und die Ausströmleitung auf der Ausgangsseite zum Herauslassen der Blasluft aus der Blasform (12) bzw. aus dem Hohlkörper an einen weiteren als Auslaßdüse wirkenden Blasdorn (18) angeschlossen ist.

3. Blasformmaschine nach Anspruch 1, wobei
das Rohrleitungssystem (14) - für besondere Hohlkörper wie z. B. Kanister, die nur eine einzige Einfüll- und Entleerungsöffnung aufweisen - nur mit einem einzigen Blasdorn ausgestattet ist, bei dem die Einströmleitung und die Ausströmleitung nebeneinander oder konzentrisch in dem einen Blasdorn angeordnet sind.

4. Blasformmaschine nach Anspruch 1, 2 oder 3, wobei
innerhalb des Rohrleitungssystems (14) für eine Reinigung der im Kreislauf geführten Blasluft wenigstens ein Filter (28, 42) vorgesehen ist.

5. Blasformmaschine nach Anspruch 1, 2, 3 oder 4, wobei
innerhalb des Rohrleitungssystems (14) für eine gezielte Temperaturführung der im Kreislauf geführten Blasluft wenigstens ein Kühler (30, 44) vorgesehen ist.

6. Blasformmaschine nach Anspruch 1, 2, 3, 4 oder 5, wobei
das Rohrleitungssystem (14) auf der Eingangsseite vor dem Blasdorn (16) und auf der Ausgangsseite hinter dem Blasdorn (18) bzw. vor der Einströmleitung und hinter Ausströmleitung zur Druckentlastung der Blasform (12) bzw. zur Artikelentnahme aus der Blasform (12) mit jeweils einem Absperrventil (36, 38) ausgerüstet ist.

7. Blasformmaschine nach einem der vorhergehenden Ansprüche 1 bis 6, wobei
die Einblasdüse auf dem Blasdorn (16) ausgangsseitig mit einer Verwirbelungseinrichtung bzw. einem Drall-Leitblech (50) ausgestattet ist.

8. Blasformmaschine nach einem der vorhergehenden Ansprüche 1 bis 7, wobei
das Rohrleitungssystem (14) auf der Ausgangsseite hinter dem Blasdorn (18) zur Beeinflussung des Innendrucks im Hohlkörper mit einem Druckregelventil (40) ausgestattet ist.

9. Blasformmaschine nach einem der vorhergehenden Ansprüche 1 bis 8, wobei
das Rohrleitungssystem (14) zum Ausgleich von Blasluft-Verlusten aus dem Kühlkreislauf mit einem Anschluß (20) an ein Blasluft-Reservoir ausgestattet ist.

10. Blasformmaschine nach einem der vorhergehenden Ansprüche 1 bis 9, wobei
zur Trocknung der Blasluft ein Trockner (52), z. B. ein Adsorptionstrockner, vorzugsweise vor dem Rückschlagventil (32), in das Rohrleitungssystem (14) integriert ist.

11. Blasformmaschine nach einem der vorhergehenden Ansprüche 1 bis 10, wobei
zur weiteren Abkühlung der Blasluft hinter dem Trockner (52) ein weiteres Kühlaggregat (54) in das Rohrleitungssystem (14) integriert ist.

12. Blasformmaschine nach einem der vorhergehenden Ansprüche 1 bis 11, wobei
hinter dem Trockner (52) zur Einleitung von ungekühlter Blasluft ein Umschaltventil mit einer Anschlußleitung an einen Blasluft-Druckbehälter vorgesehen ist.

13. Blasformmaschine nach einem der vorhergehenden Ansprüche 1 bis 12, wobei
der Trockner (52) und das Kühlaggregat (54) in einer als Bypass geschalteten parallelen Abzweigleitung angeordnet sind, die über zwei Umschaltventile (56, 60) an das Rohrleitungssystem (14) angeschlossen ist.

14. Verfahren zur Herstellung von blasgeformten Hohlkörpern aus Kunststoff, auf einer Blasformmaschine, bei welcher ein schlauchförmiger Vorformling aus verformbarem Kunststoff zwischen die geöffneten Hälften einer Blasform extrudiert und nachfolgend in der geschlossenen Blasform zum fertigen Hohlkörper aufgeblasen wird, wobei zum Aufblasen und Abkühlen des Hohlkörpers Blasluft über eine Rohrleitung bzw. einen Blasdorn in den Hohlkörper eingeblasen wird,
**dadurch gekennzeichnet, daß**
die Blasluft in dem als Ringleitung ausgebildeten Rohrleitungssystem nach erfolgtem Aufblasen des Hohlkörpers für eine kontinuierliche Kreislauf-Führung der Blasluft als Kühlmedium zur Innenkühlung des Hohlkörpers unter Sicherstellung einer immer gleichen vorgegebenen Strömungsrichtung in jedem Prozeßzustand mittels eines Verdichters ständig auf erhöhtem Druckniveau kontinuierlich im Kreislauf geführt wird, wobei das Kühlmedium in dem geschlossenen Ringleitungssystem auf der Eingangsseite über eine Einströmleitung in die Blasform eingeblasen und auf der Ausgangsseite über eine Ausströmleitung aus der Blasform herausgeführt wird, und wobei das erhöhte Druckniveau in dem geschlossenen Ringleitungssystem ständig beibehalten und lediglich zur Druckentlastung der Blasform bzw. zur Artikelentnahme auf der Eingangsseite und auf der Ausgangsseite kurzzeitig abgesperrt wird.

15. Verfahren nach Anspruch 14, wobei
die Blasluft in Abhängigkeit von der Größe des Kunststoff-Hohlkörpers auf einem Druckniveau bis ca. 20 bar im Kreislauf geführt wird.

16. Verfahren nach Anspruch 14 oder 15, wobei
die Blasluft für Kunststoff-Hohlkörper mit einem kleinen Volumen von z. B. 1 l bis 3 l auf einem Druckniveau zwischen 15 - 20 bar im Kreislauf geführt wird.

17. Verfahren nach Anspruch 14 oder 15, wobei
die Blasluft für Kunststoff-Hohlkörper mit einem mittleren Volumen von z. B. 5 l bis 60 l auf einem Druckniveau zwischen 10 - 15 bar im Kreislauf geführt wird.

18. Verfahren nach Anspruch 14 oder 15, wobei
die Blasluft für Kunststoff-Hohlkörper mit einem größeren Volumen von z. B. 120 l bis 220 l auf einem Druckniveau zwischen 9 - 12 bar im Kreislauf geführt wird.

19. Verfahren nach Anspruch 14 oder 15, wobei
die Blasluft für Kunststoff-Hohlkörper mit einem sehr großen Volumen von z. B. 1000 l auf einem Druckniveau zwischen 8 -10 bar im Kreislauf geführt wird.

20. Verfahren nach einem der vorhergehenden Ansprüche 14 bis 19, wobei
die Blasluft teilweise mit anderen gasförmigen oder flüssigen Medien wie z. B. Kohlendioxid, Stickstoff, Propan, Wasser, Edelgase oder andere Gase, die eine höhere Wärmekapazität als Luft aufweisen oder andere Kühlmittel angereichert wird.

21. Verfahren nach einem der vorhergehenden Ansprüche 14 bis 20, wobei
die Blasluft zur Erzielung einer verbesserten Kühlwirkung mittels eines Drallkörpers unter Rotationsströmung und Verwirbelung mit Verbesserung des Wärmeaustausches in den Hohlkörper eingeblasen wird.

22. Verfahren nach einem der vorhergehenden Ansprüche 14 bis 21, wobei
die Blasluft zur Erzielung einer verbesserten Kühlwirkung vor dem Einblasen in den Hohlkörper getrocknet und auf eine Temperatur zwischen 0° C und - 50 ° C, vorzugsweise ca. - 30 ° C, weiter heruntergekühlt wird.

## Claims

1. Blow-moulding machine (10) for the production of blown hollow bodies made of plastic, in which a tubular preform of deformable plastic is extruded between the opened halves of a blowing mould (12) and is then inflated in the closed blowing mould to form the finished hollow body, it being possible, for the inflation of the hollow body, for blowing air to be blown into the hollow body via a pipeline (14) or a blowing mandrel (16), and the blowing mould (12) being integrated in a closed pipeline system (14), **characterized in that** the pipeline system (14) is designed as an annular line and, for a continuous circulation of the blowing air as cooling medium for the internal cooling of the hollow body after shaping has taken place at an elevated pressure level, a compressor (26) is provided, and, in order to ensure that the predetermined direction of flow is always the same in each process state, the pipeline system (14) is equipped with at least one non-return valve (22, 32, 46), the closed pipeline system (14) having an inflow line on the input side for blowing the blowing air into the blowing mould (12) and an outflow line on the output side for letting the blowing air out of the blowing mould (12).

2. Blow-moulding machine according to Claim 1, the inflow line for blowing the blowing air into the blowing mould (12) or into the hollow body being connected to a blowing mandrel (16) acting as a blowing-in nozzle, and the outflow line on the output side for letting the blowing air out of the blowing mould (12) or out of the hollow body being connected to a further blowing mandrel (18) acting as an outlet nozzle.

3. Blow-moulding machine according to Claim 1, the pipeline system (14) - for particular hollow bodies, such as, for example, canisters which only have a single filling and emptying opening - being equipped with just a single blowing mandrel, in which the inflow line and the outflow line are arranged next to each other or concentrically in the one blowing mandrel.

4. Blow-moulding machine according to Claim 1, 2 or 3, at least one filter (28, 42) being provided within the pipeline system (14) for cleaning the circulating blowing air.

5. Blow-moulding machine according to Claim 1, 2, 3 or 4, at least one cooler (30, 44) being provided within the pipeline system (14) for conducting the blowing air at a specific temperature.

6. Blow-moulding machine according to Claim 1, 2, 3, 4 or 5, the pipeline system (14) being equipped with a respective shut-off valve (36, 38) on the input side upstream of the blowing mandrel (16) and on the output side downstream of the blowing mandrel (18) or upstream of the inflow line and downstream of the outflow line, for relieving the blowing mould (12) of pressure or for removing articles from the blowing mould (12).

7. Blow-moulding machine according to one of the preceding Claims 1 to 6, the blowing-in nozzle on the blowing mandrel (16) being equipped on the output side with a swirl-producing device or a swirl-directing vane (50).

8. Blow-moulding machine according to one of the preceding Claims 1 to 7, the pipeline system (14) being equipped on the output side downstream of the blowing mandrel (18) with a pressure-regulating valve (40) for influencing the internal pressure in the hollow body.

9. Blow-moulding machine according to one of the preceding Claims 1 to 8, the pipeline system (14) being equipped with a connection (20) to a blowing-air reservoir in order to compensate for blowing-air losses from the cooling circuit.

10. Blow-moulding machine according to one of the preceding Claims 1 to 9, a drier (52), for example an adsorption drier, being integrated into the pipeline system (14), preferably upstream of the non-return valve (32), for drying the blowing air.

11. Blow-moulding machine according to one of the preceding Claims 1 to 10, a further cooling unit (54) being integrated into the pipeline system (14) for further cooling the blowing air downstream of the drier (52).

12. Blow-moulding machine according to one of the preceding Claims 1 to 11, a switch-over valve having a connecting line to a blowing-air pressure container being provided downstream of the drier (52) for introducing uncooled blowing air.

13. Blow-moulding machine according to one of the preceding Claims 1 to 12, the drier (52) and the cooling unit (54) being arranged in a parallel branch line which is connected as a bypass and is connected to the pipeline system (14) via two switch-over valves (56, 60).

14. Method for the production of blown hollow bodies made of plastic, on a blow-moulding machine, in which a tubular preform of deformable plastic is extruded between the opened halves of a blowing mould and is subsequently inflated in the closed blowing mould to form the finished hollow body, blowing air being blown into the hollow body via a pipeline or a blowing mandrel in order to inflate and cool the hollow body, **characterized in that**, for a continuous circulation of the blowing air as cooling medium for the internal cooling of the hollow body after the hollow body has been inflated, the blowing air in the pipeline system, which is designed as an annular line, is continuously circulated constantly at an elevated pressure level by means of a compressor, with a predetermined direction of flow which is always the same being ensured in each process state, the cooling medium in the closed annular line system being blown into the blowing mould on the input side via an inflow line and being guided out of the blowing mould on the output side via an outflow line, and the elevated pressure level in the closed annular line system being constantly maintained and being briefly shut off on the input side and on the output side only for relieving the blowing mould of pressure or for removing articles.

15. Method according to Claim 14, the blowing air being circulated at a pressure level of up to approx. 20 bar depending on the size of the plastic hollow body.

16. Method according to Claim 14 or 15, the blowing air for plastic hollow bodies having a small volume of, for example, 1 l to 3 l being circulated at a pressure level of between 15-20 bar.

17. Method according to Claim 14 or 15, the blowing air for plastic hollow bodies having a medium volume of, for example, 5 l to 60 l, being circulated at a pressure level of between 10-15 bar.

18. Method according to Claim 14 or 15, the blowing air for plastic hollow bodies having a relatively large volume of, for example, 120 l to 220 l, being circulated at a pressure level of between 9-12 bar.

19. Method according to Claim 14 or 15, the blowing air for plastic hollow bodies having a very large volume of, for example, 1000 l, being circulated at a pressure level of between 8-10 bar.

20. Method according to one of the preceding Claims 14 to 19, the blowing air being partially enriched with other gaseous or liquid media, such as, for example, carbon dioxide, nitrogen, propane, water, inert gases or other gases which have a higher heat capacity than air or other coolants.

21. Method according to one of the preceding Claims 14 to 20, the blowing air, in order to obtain an improved cooling effect, being blown by means of a swirl body with rotational flow and swirling into the hollow body with the heat exchange being improved.

22. Method according to one of the preceding Claims 14 to 21, the blowing air, in order to obtain an improved cooling effect, being dried before being blown into the hollow body and being cooled further to a temperature of between 0°C and -50°C, preferably approx. -30°C.

## Revendications

1. Machine (10) de moulage-soufflage pour la fabrication de corps creux moulés-soufflés en matière synthétique, dans laquelle une ébauche en forme de manchon creux en matière synthétique déformable est extrudée entre les moitiés ouvertes d'un moule de soufflage (12) et est ensuite gonflée dans le moule de soufflage fermé pour fournir un corps creux prêt à l'emploi, de l'air de soufflage pouvant être injecté dans le corps creux par un conduit tubulaire (14) ou un mandrin de soufflage (16) pour gonfler le corps creux, le moule de soufflage (12) étant intégré dans un système fermé (14) de conduits tubulaires,
**caractérisée en ce que** le système (14) de conduits tubulaires est configuré comme conduit en boucle et **en ce qu'**un compresseur (26) est prévu pour amener en continu dans le circuit l'air de soufflage comme fluide de refroidissement servant au refroidissement interne du corps creux lorsque son moulage à un niveau de pression élevé est terminé, le système (14) de conduits tubulaires étant configuré pour garantir à l'aide d'au moins une soupape anti-retour (22, 32, 46) une direction d'écoulement prédéterminée toujours identique dans chaque état du processus, le système (14) fermé de conduits en boucle présentant du côté de l'entrée un conduit d'entrée pour le soufflage de l'air de soufflage dans le moule de soufflage (12), et du côté de la sortie un conduit de sortie pour extraire l'air de soufflage hors du moule de soufflage (12).

2. Machine de moulage-soufflage selon la revendication 1, dans laquelle le conduit d'entrée pour le soufflage d'air de soufflage dans le moule de soufflage (12) et dans le corps creux est raccordé à un mandrin de soufflage (16) qui joue le rôle d'un ajutage de soufflage, le conduit de sortie situé du côté de la sortie pour l'extraction de l'air de soufflage hors du moule de soufflage (12) et hors du corps creux étant raccordé à un autre mandrin de soufflage (18) qui joue le rôle d'un ajutage de sortie.

3. Machine de moulage-soufflage selon la revendication 1, dans laquelle pour des corps creux particuliers, par exemple des canettes qui ne présentent qu'une seule ouverture pour le remplissage et leur vidage, le système (14) de conduits tubulaires n'est doté que d'un seul mandrin de soufflage, le conduit d'entrée et le conduit de sortie étant disposés l'un à côté de l'autre ou concentriquement dans ce mandrin de soufflage unique.

4. Machine de moulage-soufflage selon la revendication 1, 2 ou 3, dans laquelle au moins un filtre (28, 42) est prévu à l'intérieur du système (14) de conduits tubulaires pour nettoyer l'air de soufflage mis en circulation dans le circuit.

5. Machine de moulage-soufflage selon la revendication 1, 2, 3 ou 4, dans laquelle au moins un refroidisseur (30, 44) est prévu à l'intérieur du système (14) de conduits tubulaires en vue d'un maintien contrôlé de la température de l'air de soufflage mis en circulation dans le circuit.

6. Machine de moulage-soufflage selon la revendication 1, 2, 3, 4 ou 5, dans laquelle du côté de l'entrée, le système (14) de conduits tubulaires est équipé d'une soupape de blocage (36, 38) située en amont du mandrin de soufflage (16) et du côté de la sortie, d'une soupape de blocage (36, 38) située en aval du mandrin de soufflage (18) ou en amont du conduit d'entrée et en aval du conduit de sortie, pour le délestage de la pression du moule de soufflage (12) ou l'enlèvement des objets hors du moule de soufflage (12).

7. Machine de moulage-soufflage selon l'une des revendications 1 à 6 qui précèdent, dans laquelle l'ajutage de soufflage prévu sur le mandrin de soufflage (16) est doté du côté de sa sortie d'un dispositif de tourbillonnage ou d'une chicane de tourbillonnage (50).

8. Machine de moulage-soufflage selon l'une des revendications 1 à 7 qui précèdent, dans laquelle le système (14) de conduits tubulaires est doté sur le côté de la sortie, en aval du mandrin de soufflage (18), d'une soupape de régulation de pression (40) qui sert à agir sur la pression intérieure qui règne dans le corps creux.

9. Machine de moulage-soufflage selon l'une des revendications 1 à 8 qui précèdent, dans laquelle pour compenser les pertes d'air de soufflage du circuit de refroidissement, le système (14) de conduits tubulaires est doté d'un raccordement (20) à un réservoir d'air de soufflage.

10. Machine de moulage-soufflage selon l'une des revendications 1 à 9 qui précèdent, dans laquelle pour le séchage de l'air de soufflage, un séchoir (52), par exemple un séchoir à adsorption, est intégré dans le système (14) de conduits tubulaires, de préférence en amont de la soupape anti-retour (32).

11. Machine de moulage-soufflage selon l'une des revendications 1 à 10 qui précèdent, dans laquelle, pour encore refroidir l'air de soufflage, un autre appareil de refroidissement (54) est intégré dans le système (14) de conduits tubulaires en aval du séchoir (52).

12. Machine de moulage-soufflage selon l'une des revendications 1 à 11 qui précèdent, dans laquelle une soupape commutable dotée d'un conduit de raccordement à un réservoir d'air de soufflage sous pression est prévue en aval du séchoir (52) pour injecter de l'air de soufflage non refroidi.

13. Machine de moulage-soufflage selon l'une des revendications 1 à 12 qui précèdent, dans laquelle le séchoir (52) et l'appareil de refroidissement (54) sont disposés dans un conduit de dérivation parallèle raccordé sous la forme d'une dérivation qui est raccordée au système (14) de conduits tubulaires par deux soupapes commutables (56, 60).

14. Procédé de fabrication de corps creux moulés-soufflés en matière synthétique, sur une machine de moulage-soufflage dans laquelle une ébauche en forme de manchon flexible en matière synthétique déformable est extrudée entre les moitiés ouvertes d'un moule de soufflage et est ensuite gonflée dans le moule de soufflage fermé pour obtenir le corps creux prêt à l'emploi, et dans laquelle pour le soufflage et le refroidissement du corps creux, on injecte de l'air de soufflage dans le corps creux par un conduit tubulaire ou un mandrin de soufflage,
**caractérisé en ce que**
lorsque le soufflage du corps creux est terminé, l'air de soufflage est amené dans le système de conduits tubulaires configuré comme système en boucle, en vue d'amener en continu dans le circuit l'air de soufflage qui sert de fluide de refroidissement en vue du refroidissement interne du corps creux tout en garantissant une direction d'écoulement prédéterminée toujours identique dans chaque état du processus, et est mis en circulation continue dans un circuit fermé à un haut niveau de pression au moyen d'un compresseur, le fluide de refroidissement présent dans le système fermé de conduits en boucle étant injecté du côté de l'entrée du moule de soufflage par un conduit d'entrée et étant du côté de la sortie extrait du moule de soufflage par un conduit de sortie, le niveau de pression élevé étant maintenu en permanence dans le système fermé de conduits en boucle et n'étant bloqué brièvement que pour le délestage de la pression du moule de soufflage du côté de l'entrée et l'enlèvement des objets du côté de la sortie.

15. Procédé selon la revendication 14, dans lequel l'air de soufflage est maintenu en circulation à un niveau de pression qui peut atteindre environ 20 bars, en fonction de la taille du corps creux en matière synthétique.

16. Procédé selon la revendication 14 ou 15, dans lequel pour des corps creux en matière synthétique de petit volume, par exemple de 1 l à 3 l, l'air de soufflage est mis en circulation dans le circuit fermé à un niveau de pression compris entre 15 et 20 bars.

17. Procédé selon la revendication 14 ou 15, dans lequel pour des corps creux en matière synthétique d'un volume moyen de par exemple 5 l à 60 l, l'air de soufflage est mis en circulation dans le circuit fermé à un niveau de pression compris entre 10 et 15 bars.

18. Procédé selon la revendication 14 ou 15, dans lequel pour des corps creux en matière synthétique de plus grand volume, par exemple de 120 l à 220 l, l'air de soufflage est mis en circulation dans le circuit fermé à un niveau de pression compris entre 9 et 12 bars.

19. Procédé selon la revendication 14 ou 15, dans lequel pour des corps creux en matière synthétique d'un très grand volume, par exemple de 1 000 l, l'air de soufflage est mis en circulation dans le circuit fermé à un niveau de pression compris entre 8 et 10 bars.

20. Procédé selon l'une des revendications 14 à 19 qui précèdent, dans lequel une partie de l'air de soufflage est enrichie en autres fluides gazeux ou liquides, par exemple du dioxyde de carbone, de l'azote, du propane, de l'eau, des gaz rares ou d'autres gaz, qui présentent une capacité calorifique plus élevée que l'air, ou en autres fluides de refroidissement.

21. Procédé selon l'une des revendications 14 à 20 qui précèdent, dans lequel, pour obtenir un meilleur effet de refroidissement, l'air de soufflage est injecté dans le corps creux au moyen d'un corps de tourbillonnage avec écoulement rotatif et tourbillonnage en vue d'améliorer l'échange de chaleur.

22. Procédé selon l'une des revendications 14 à 21 qui précèdent, dans lequel, pour obtenir un meilleur effet de refroidissement, l'air de soufflage est séché avant d'être injecté dans le corps creux et est refroidi davantage, à une température comprise entre 0°C et -50°C et de préférence à environ -30°C.
